# EUROPEAN PATENT APPLICATION

(11) **EP 4 513 036 A1**
(43) Date of publication of application: **26.02.2025**
(21) Application number: 23811370.8
(22) Date of filing: 15.02.2023
(51) Int. Cl.: F04B 49/10, B60H 1/00, B61D 27/00, F25B 49/02

(54) **OPERATION RECORDING SYSTEM, VEHICLE, OPERATION RECORDING METHOD AND OPERATION RECORDING PROGRAM**

(30) Priority: 24.05.2022 JP 2022084608
(71) Applicant: MITSUBISHI HEAVY INDUSTRIES THERMAL SYSTEMS, LTD., Tokyo 100-8332 (JP)
(72) Inventor: HATTORI, Makoto, Tokyo 100-8332 (JP)
(74) Representative: Cabinet Beau de Loménie
(86) International application number: PCT/JP2023/005334
(87) International publication number: WO 2023/228489

(57) **Abstract**

Provided are an operation recording system, a vehicle, an operation recording method and an operation recording program which make it possible to perform an abnormality analysis of a highly accurate compressor. An operation recording system to be used in an electric compressor of a vehicle air-conditioning system equipped with an inverter circuit (50), said system being equipped with: an acquisition unit for acquiring, as abnormality reference information, at least one type of information from among temperature information at a prescribed position in the inverter circuit (50), voltage information at a prescribed position in the inverter circuit (50) and electric current information at a prescribed position in the inverter circuit (50); and a recording processing unit for recording the abnormality reference information and time information which can be associated with said abnormality reference information in a prescribed recording unit.

## Description

### Technical Field

The present disclosure relates to an operation recording system, a vehicle, an operation recording method, and an operation recording program.

### Background Art

A compressor is used for an air conditioner to compress a refrigerant. In the compressor, an operation state may be detected and used as an item for controlling an operation of the compressor (PTL 1 and PTL 2).

### Citation List

### Patent Literature

[PTL 1] Japanese Unexamined Patent Application Publication No. 2017-161195
[PTL 2] Japanese Unexamined Patent Application Publication No. 2018-74632

### Summary of Invention

### Technical Problem

For example, regarding on an abnormality of the compressor, a simple abnormality detection such as determining that an abnormality has occurred when a voltage is lowered to a value equal to or less than a threshold value may be performed. However, although the comparison between one item (for example, voltage) and the threshold value can detect abnormality in the real-time, it is difficult to perform a detailed analysis of the abnormality detection. A memory mounted in a compressor (particularly, a vehicle air conditioner) has a small capacity and has not been used to store, for example, an operation state with a sufficient amount of data. As described above, there is a possibility that the accuracy of the abnormality detection of the compressor can be further improved.

The present disclosure has been made in view of such circumstances, and an object thereof is to provide an operation recording system, a vehicle, an operation recording method, and an operation recording program, which can perform an abnormality analysis of a compressor with high accuracy.

### Solution to Problem

An operation recording system according to an aspect in some embodiments of the present disclosure is an operation recording system applied to an electric compressor of a vehicle air conditioning system including an inverter circuit, the operation recording system includes an acquisition unit that acquires, as abnormality reference information, at least one of temperature information at a predetermined position in the inverter circuit, voltage information at the predetermined position in the inverter circuit, and current information at the predetermined position in the inverter circuit; and a recording processing unit that records the abnormality reference information and time information capable of being associated with the abnormality reference information in a predetermined recording unit.

An operation recording method according to an aspect in some embodiments of the present disclosure is an operation recording method applied to an electric compressor of a vehicle air conditioning system including an inverter circuit, the method includes an acquiring step of acquiring, as abnormality reference information, at least one of temperature information at a predetermined position in the inverter circuit, voltage information at the predetermined position in the inverter circuit, and current information at the predetermined position in the inverter circuit; and a recording processing step of recording the abnormality reference information and time information capable of being associated with the abnormality reference information in a predetermined recording unit.

### Advantageous Effects of Invention

According to the present disclosure, there is an effect that it is possible to perform highly accurate abnormality analysis of a compressor.

### Brief Description of Drawings

Fig. 1 is a diagram showing a schematic configuration of an inverter circuit according to one embodiment of the present disclosure.
Fig. 2 is a schematic configuration diagram showing an example of a hardware configuration included in an operation recording system according to one embodiment of the present disclosure.
Fig. 3 is a functional block diagram showing functions included in the operation recording system according to one embodiment of the present disclosure.
Fig. 4 is a diagram showing an example of generation of a surge current according to one embodiment of the present disclosure.
Fig. 5 is a flowchart showing an example of a procedure to deal with the process according to one embodiment of the present disclosure.

Hereinafter, an operation recording system, a vehicle, an operation recording method, and an operation recording program according to one embodiment of the present disclosure will be described with reference to the drawings.

### (Configuration of Inverter Circuit)

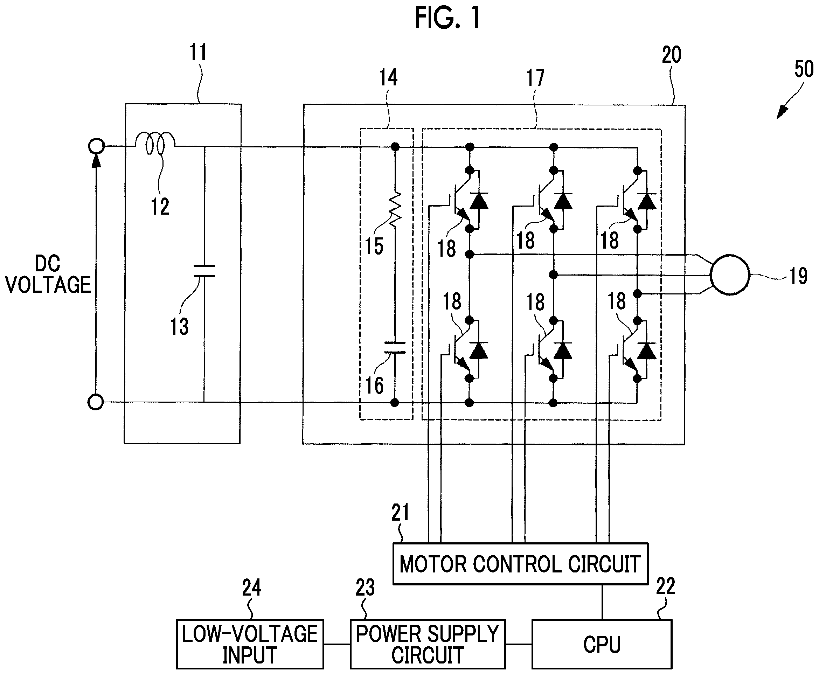

Fig. 1 is a diagram showing a schematic configuration of an inverter circuit 50 according to one embodiment of the present disclosure. The configuration of the inverter circuit 50 shown in Fig. 1 is an example and may be another configuration.

In the inverter circuit 50, a direct voltage (DC voltage) is input. For example, as shown in Fig. 1, the direct voltage is input to the filter circuit 11. The filter circuit 11 includes a reactor 12 connected in series, for example, as shown in Fig. 1, and a capacitor (smoothing capacitor) 13 connected in parallel. The filter circuit 11 is a type of low-pass filter (LPF).

The direct voltage is input to the snubber circuit 14. The snubber circuit 14 is a circuit that suppresses ringing generated during switching. The snubber circuit 14 is, for example, an RC snubber circuit in which an RC unit in which a resistor 15 and a capacitor 16 are directly connected is connected in parallel, as shown in Fig. 1.

Then, the direct voltage is connected to the switching unit 17 via the snubber circuit 14. The switching unit 17 is a three-phase inverter circuit, and is configured by six switching elements 18 as shown in Fig. 1. The switching element 18 is, for example, an IGBT. The three-phase alternating current is generated by controlling each IGBT and is output to the motor 19 of the electric compressor.

Each switching element 18 is controlled by a signal from the motor control circuit 21 to each control terminal. The motor control circuit 21 is controlled by the CPU 22. For example, the CPU 22 outputs a rotation speed command of the motor 19 to the motor control circuit 21. The voltage from the low-voltage input 24 is voltage-regulated by the power supply circuit 23 and the power is supplied to the CPU 22.

As shown in Fig. 1, for example, a snubber circuit 14 and a switching unit 17 are formed on a power substrate (inverter substrate) 20.

### (Configuration of Operation Recording System)

The operation recording system 60 records various types of information of the inverter circuit 50 for detecting an abnormality in the inverter circuit 50.

The operation recording system 60 is mounted on the electric compressor together with, for example, the inverter circuit 50. That is, the electric compressor includes an operation recording system 60 and a motor 19. The electric compressor is provided in a vehicle air conditioning system. That is, in the vehicle air conditioning system, the refrigerant is compressed by the electric compressor. Such a vehicle air conditioning system is provided in a vehicle.

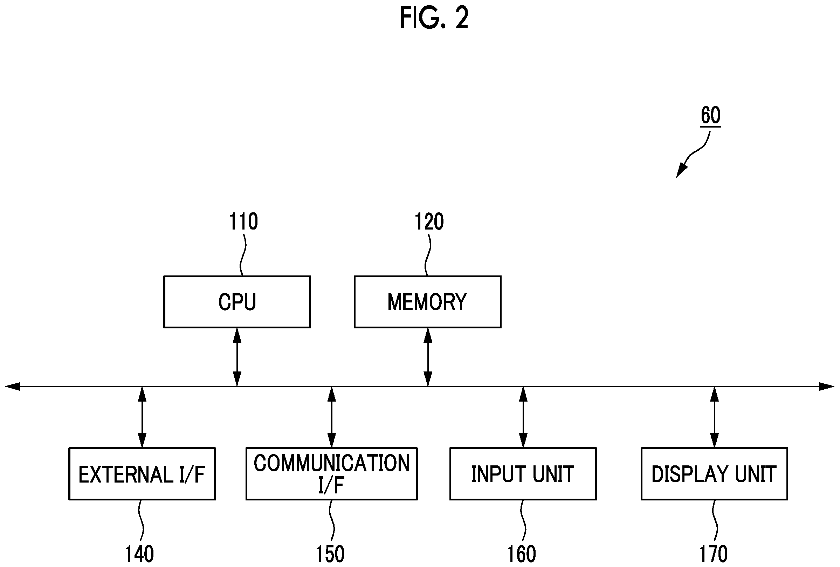

Fig. 2 is a schematic configuration diagram showing an example of a hardware configuration included in an operation recording system 60 according to one embodiment of the present disclosure. As shown in Fig. 2, the operation recording system 60 is a so-called computer, and includes, for example, a central processing unit (CPU) 110, a memory 120, an external interface 140, and a communication interface 150. The above-described components are directly or indirectly connected to each other via a bus, and perform various processes in cooperation with each other.

The CPU 110 executes various processes, for example, by a program stored in the CPU 110.

The memory 120 is configured to include, for example, a memory such as an EEPROM. For example, information from various sensors is stored in the memory 120.

The external interface 140 is an interface for connection to an external device. Examples of the external device include an external monitor, a USB memory, and an external HDD. In an example shown in Fig. 2, only one external interface is shown. However, a plurality of external interfaces may be provided.

The communication interface 150 is connected to a network and communicates with other devices to function as an interface for transmission and reception of information.

For example, the communication interface 150 communicates with other devices in a wired or wireless manner. As the vehicle, a CAN or a LIN is used. In addition, wireless communication or the like may be used, and examples thereof include BLUETOOTH (registered trademark), WI-FI, and communication using a dedicated communication protocol. Examples of wired communication include a wired local area network (LAN).

For example, an input unit 160 and a display unit 170 may be provided. The input unit 160 is, for example, a user interface for issuing an instruction such as a keyboard, a mouse, and a touch pad. The display unit 170 is, for example, a liquid-crystal display, an organic electroluminescence (EL) display, or the like. The display unit 170 may be a touch panel display overlaid with a touch panel.

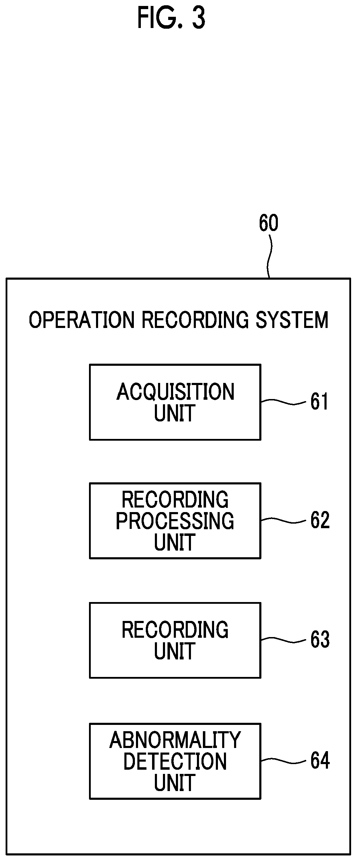

Fig. 3 is a functional block diagram showing functions included in the operation recording system 60. As shown in Fig. 3, the operation recording system 60 includes an acquisition unit 61, a recording processing unit 62, a recording unit 63, and an abnormality detection unit 64.

The operation recording system 60 is mounted on, for example, the electric compressor, but the functions of the respective units are not limited to being mounted on the electric compressor. For example, the acquisition unit 61 and the recording processing unit 62 may be mounted on the electric compressor, and the recording unit 63 may be provided in a device (for example, a server) different from the electric compressor, or the abnormality detection unit 64 may be provided in a device (for example, a server) different from the electric compressor, and the location of each function may be centralized in one device or may be distributed to a plurality of devices.

In the present embodiment, the operation recording system 60 includes the abnormality detection unit 64. However, the abnormality detection unit 64 may be omitted. In this case, for example, information recorded in the recording unit 63 may be taken out and analyzed by an inspector or the like to detect an abnormality.

The acquisition unit 61 acquires, as operation information (abnormality reference information), at least one of the temperature information at the predetermined position in the inverter circuit 50, the voltage information at the predetermined position in the inverter circuit 50, and the current information at the predetermined position in the inverter circuit 50. The operation information (abnormality reference information) is information that is used as a reference for abnormality detection. That is, the operation information is the operation information related to the abnormality, and specifically, is the temperature information, the current information, and the voltage information. Information other than the above may also be used as the operation information. For example, the rotation speed of the compressor may be used.

The temperature information is at least one of a temperature of the switching element (IGBT) 18 in the inverter circuit 50, a temperature of the capacitor (particularly, the capacitor 13) in the inverter circuit 50, and a temperature of the CPU 22 and other components (components set in advance as targets) to be monitored thermally in the inverter circuit 50.

The voltage information is at least one of a voltage of the switching element 18 in the inverter circuit 50, a voltage of the capacitor (particularly, the capacitor 13) in the inverter circuit 50, and a surge voltage generated in the inverter circuit 50.

The current information is at least one of a current flowing through the switching element 18 in the inverter circuit 50, a current flowing through the capacitor (particularly, the capacitor 13) in the inverter circuit 50, and a surge current generated in the inverter circuit 50.

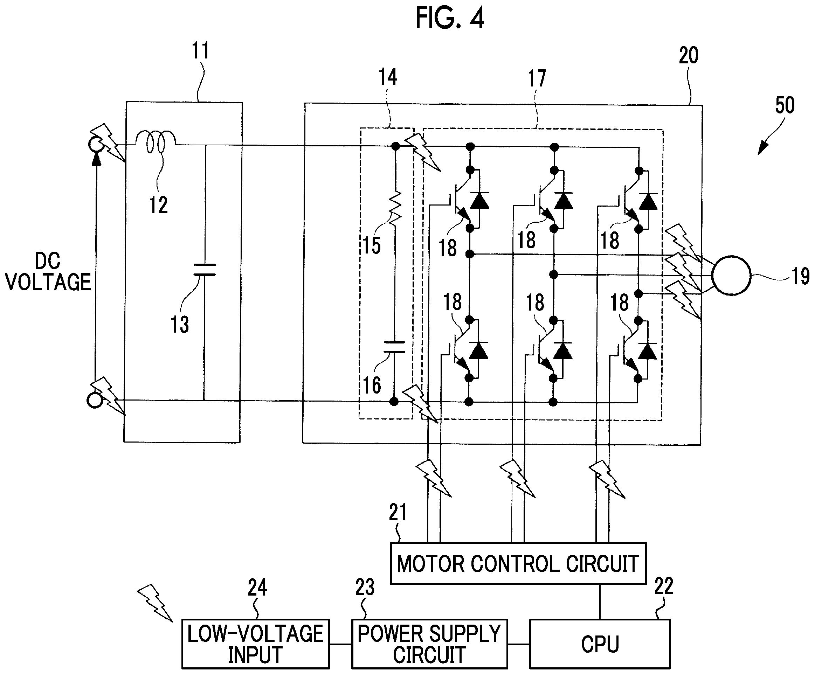

The surge voltage is generated in each part shown in Fig. 4, for example. Specific examples include a terminal (a positive electrode terminal and a negative electrode (GND) terminal) to which a direct voltage is supplied, a wire (a positive electrode side and a negative electrode (GND) side) on an output side of the snubber circuit 14 (an input side of the switching unit 17), each three-phase wire on an output side of the switching unit 17, a control wire of each switching element 18 (a wire from the motor control circuit 21 to a control terminal of each switching element 18), and a wire of the low-voltage input 24. For example, the surge voltage is detected in the above-described terminal or wire. The same applies to the surge current as to surge voltage.

The recording unit 63 is a unit capable of recording information. The recording unit 63 is, for example, a memory. The recording unit 63 is, for example, a memory that is built in advance in the electric compressor. However, the recording unit 63 is not limited to being built in the electric compressor, and may be provided in a device different from the electric compressor, for example.

The recording processing unit 62 records the operation information and the time information in association with each other in the predetermined recording unit 63. That is, the recording processing unit 62 performs recording processing of the operation information associated with the time information in the recording unit 63.

Specifically, the recording processing unit 62 records the operation information and the time information related to the operation information in association with each other. The time information is, for example, at least any one of a continuous time, an intermittent time, and a time point. The continuous time is a time when the operation information continuously satisfies a predetermined condition. For example, the temperature information is a time during which the temperature information is continuously equal to or higher than a predetermined value. The intermittent time is a total time when the operation information satisfies a predetermined condition. Specifically, the intermittent time is a time obtained by totaling continuous times in which the operation information satisfies the predetermined condition within a predetermined period. For example, in a case where the time during which the temperature information is continuously equal to or higher than the predetermined value within the predetermined period is defined as T1 and T2, the intermittent time is T1 + T2. The time point is a detection time of the operation information. For example, a value detected as temperature information and the time point thereof are associated with each other. An operation cumulative time may be used as the time information. The operation cumulative time (compressor operation time) is, for example, a cumulative time from a factory shipment.

In a case of associating the temperature information with the time information, for example, the acquisition target of the temperature information (for example, the temperature of the switching element 18) and the time during which the temperature exceeds a certain threshold value or the time point when the temperature exceeds a certain threshold value are recorded. In such a case, the amount of data to be recorded can be reduced. A value obtained by time-integrating the value of the temperature may be recorded. As the acquisition target of the temperature information, targeting a component that generates heat like the switching element 18 or a component set in advance as a target because of being sensitive to heat is effective for abnormality detection. When the heat-generating component is in a high-temperature state for a long time, it can be determined that abnormal heat generation has occurred, and when the temperature of the heat-sensitive component is high for a long time, it can be determined that the component is abnormal.

In a case of associating the voltage information with the time information, for example, the acquisition target of the voltage information (for example, the voltage of the switching element 18) and the time during which the voltage exceeds a certain threshold value or the time point when the voltage exceeds a certain threshold value are recorded. In such a case, the amount of data to be recorded can be reduced. A value obtained by time-integrating the value of the voltage may be recorded.

In a case of associating the current information with the time information, for example, the acquisition target of the current information (for example, the current flowing through the switching element 18) and the time during which the current exceeds a certain threshold value or the time point when the current exceeds a certain threshold value are recorded. In such a case, the amount of data to be recorded can be reduced. A value obtained by time-integrating the value of the current may be recorded.

In this way, the recording processing unit 62 records the operation information and the time information in association with each other. Therefore, it is possible to perform the abnormality detection with high accuracy by referring to the record information. The record may be made in association with condition, surrounding information, vehicle information, and compressor information. For example, the records may be recorded in association with vehicle speed, whether charging is required or not, ambient temperature, battery voltage, compressor rotation speed, highpressure pressure, the low-pressure pressure, or the like.

The abnormality detection unit 64 performs abnormality detection based on the information recorded in the recording unit 63. Specifically, the abnormality detection unit 64 takes out the information of the recording unit 63 and performs abnormality detection on the inverter circuit 50. As the abnormality detection, it may be detected that the abnormality has occurred, or it may be detected that there is a high possibility of an abnormality occurring (precursor to abnormality) before the abnormality actually occurs (abnormality prediction).

For example, in a case where the acquisition target of the temperature information (for example, the temperature of the switching element 18) and the time during which the temperature exceeds a certain threshold value or the time point when the temperature exceeds a certain threshold value are recorded, when the total time in which the temperature indicated by the temperature information is equal to or higher than the threshold value is equal to or higher than the threshold value, it is assumed that the high-temperature state continues for a long time, and thus the abnormality detection is performed. In a case of recording a value obtained by time-integrating the value of the temperature, the abnormality detection may be performed in a case where the integrated value is equal to or higher than a threshold value.

For example, in a case where the acquisition target of the voltage information (for example, a voltage of the switching element 18) and the time during which the voltage exceeds a certain threshold value or the time point when the voltage exceeds a certain threshold value are recorded, when the total time in which the voltage value indicated by the voltage information is equal to or higher than the threshold value is equal to or higher than the threshold value, it is assumed that the high-voltage state continues for a long time, and thus the abnormality detection is performed. In a case of recording a value obtained by time-integrating the value of the voltage, the abnormality detection may be performed in a case where the integrated value is equal to or higher than a threshold value.

For example, in a case where the acquisition target of the current information (for example, the current flowing through the switching element 18) and the time during which the current exceeds a certain threshold value or the time point when the current exceeds a certain threshold value are recorded, when the total time in which the current value indicated by the current information is equal to or higher than the threshold value is equal to or higher than the threshold value, it is assumed that the high-current state continues for a long time, and thus the abnormality detection is performed. In a case of recording a value obtained by time-integrating the value of the current, the abnormality detection may be performed in a case where the integrated value is equal to or higher than a threshold value.

The abnormality detection unit64 performs the detection as described above to detect the abnormality in the inverter circuit 50. In the abnormality detection, an abnormality degree or a possibility of the abnormality may be output, or a flag may be output in a case where the abnormality degree or the possibility of the abnormality is equal to or higher than a predetermined value.

### (Flow of Process by Operation Recording System)

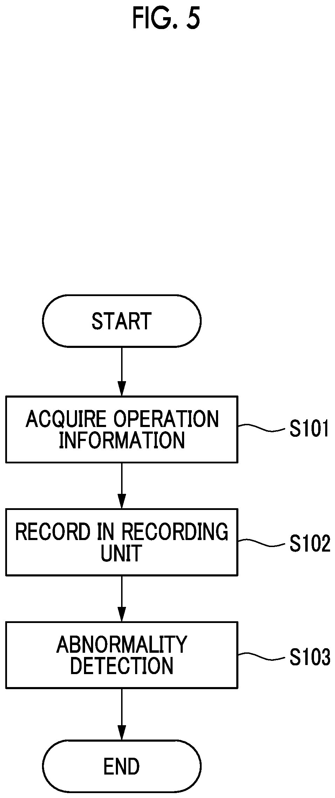

Next, an example of a process by the above-described operation recording system 60 will be described with reference to Fig. 5. Fig. 5 is a flowchart showing an example of procedure to deal with the process according to the present embodiment. The flow shown in Fig. 5 is repeatedly executed, for example, in a predetermined control cycle.

First, operation information is acquired (S101). Then, the operation information and the time information are associated with each other and recorded in the recording unit 63 (S102).

Then, the abnormality detection is performed based on the information recorded in the recording unit 63 (S103). The abnormality detection in S103 may be omitted. In this case, for example, the recorded information may be taken out and analyzed by an analyst or the like.

As described above, according to the operation recording system, the vehicle, the operation recording method, and the operation recording program according to the present embodiment, it is possible to efficiently detect or predict an abnormality by recording the time information in association with at least one of the temperature information, the voltage information, and the current information as the abnormality reference information in the electric compressor of the vehicle air conditioning system. That is, for example, it is possible to take out the information recorded at the time of the regular inspection and perform a detailed inspection.

The present disclosure is not limited to only the embodiments described above, and various modifications can be made within a scope which does not depart from the concept of the invention.

In the above-described embodiment, a case where the operation information and the time information are recorded in association with each other has been described as an example, but the present disclosure is not limited to this example. For example, the recording processing unit 62 may record the abnormality reference information and the time information capable of being associated with the abnormality reference information in a predetermined recording unit 63. More specifically, the recording processing unit 62 may record the abnormality reference information and the time information related to the abnormality reference information in the predetermined recording unit 63.

For example, in a case where an inspector or the like confirms an output signal of various sensors, an abnormal noise, or an abnormality such as a defect detected by various sensors by some method, information (an example of "time information") such as the operation time of the compressor at the time of confirmation may be collated. In this case, at the time of recording the operation information ("abnormality reference information"), the operation information and the time information are not associated with each other, and the cumulative operation time from the factory shipment is simply counted. Then, when the operation information is recorded, the cumulative operation time at the time of recording may be acquired, and it may be estimated that the time point when the operation information is recorded is around the cumulative operation time.

In this example, notification means for notifying an inspector or the like that the operation information has been recorded may be further included. The operation information may be indirectly notified to an inspector or the like through the abnormality detection of another device connected to the compressor. The operation may be simply to regularly perform an inspection. The notification means may not need to be provided, and the operation information and the time information may be "associated" with each other by other methods within a scope not departing from the scope of the invention.

The operation recording system, the vehicle, the operation recording method, and the operation recording program described in each of the above-described embodiments are understood as follows, for example.

An operation recording system (60) according to a first aspect of the present disclosure is an operation recording system applied to an electric compressor of a vehicle air conditioning system including an inverter circuit (50), the operation recording system includes an acquisition unit (61) that acquires, as abnormality reference information, at least one of temperature information at a predetermined position in the inverter circuit, voltage information at the predetermined position in the inverter circuit, and current information at the predetermined position in the inverter circuit; and a recording processing unit (62) that records the abnormality reference information and time information capable of being associated with the abnormality reference information in a predetermined recording unit (63).

The operation recording system according to the present disclosure, it is possible to efficiently detect or predict an abnormality by recording the time information in association with at least one of the temperature information, the voltage information, and the current information as the abnormality reference information in the electric compressor of the vehicle air conditioning system. That is, for example, it is possible to take out the information recorded at the time of the regular inspection and perform a detailed inspection.

A second aspect of the present disclosure provides the operation recording system according to the first aspect, in which the temperature information may be at least one of a temperature of a switching element (18) in the inverter circuit, a temperature of a capacitor in the inverter circuit, and a temperature of a CPU in the inverter circuit.

According to the operation recording system of the present disclosure, by using at least one of a temperature of a switching element, a temperature of a capacitor, and a temperature of a CPU as temperature information, it is possible to effectively use the information as the abnormality reference information in an electric compressor of a vehicle air conditioning system.

A third aspect of the present disclosure provides the operation recording system according to the first aspect or the second aspect, in which the voltage information may be at least one of a voltage of the switching element in the inverter circuit, a voltage of the capacitor in the inverter circuit, and a surge voltage generated in the inverter circuit.

According to the operation recording system according to the present disclosure, it is possible to effectively use the information as the abnormality reference information in the electric compressor of a vehicle air conditioning system.

A fourth aspect of the present disclosure provides the operation recording system according to any one of the first aspect to the third aspect, in which the current information may be at least one of a current flowing through the switching element in the inverter circuit, a current flowing through the capacitor in the inverter circuit, and a surge current generated in the inverter circuit.

According to the operation recording system of the present disclosure, by using at least one of the current flowing through the switching element, the current flowing through the capacitor, and the surge current as the current information, it is possible to effectively use the information as the abnormality reference information in an electric compressor of a vehicle air conditioning system.

A fifth aspect of the present disclosure provides the operation recording system according to any one of the first aspect to the fourth aspect, in which the recording unit may be a memory built in the electric compressor in advance or a memory provided in a device different from the electric compressor.

According to the operation recording system of the present disclosure, the recording unit may be a memory built in the electric compressor, or may be a memory provided in a device different from the electric compressor.

A sixth aspect of the present disclosure provides the operation recording system according to any one of the first aspect to the fifth aspect, in which the time information may be at least one of a continuous time that is a time when the abnormality reference information continuously satisfies a predetermined condition, an intermittent time that is a total time when the abnormality reference information satisfies the predetermined condition, and a detection time of the abnormality reference information.

According to the operation recording system of the present disclosure, it is possible to effectively perform the abnormality detection by using at least one of the continuous time, the intermittent time, and the detection time as the time information.

A seventh aspect of the present disclosure provides the operation recording system according to any one of the first aspect to the sixth aspect, which further includes an abnormality detection unit (64) that performs abnormality detection based on information recorded in the recording unit.

According to the operation recording system according to the present disclosure, it is possible to perform more accurate abnormality detection based on the information recorded in the recording unit. As the abnormality detection, it may be detected that the abnormality has occurred, or it may be detected that there is a high possibility of an abnormality occurring (precursor to abnormality) before the abnormality actually occurs.

An eighth aspect of the present disclosure provides the operation recording system according to the seventh aspect, in which the abnormality detection unit may perform abnormality detection in a case where, when a temperature indicated by the temperature information is equal to or higher than a threshold value, a total time is equal to or higher than a threshold value.

According to the operation recording system according to the present disclosure, it is assumed that the high-temperature state continues for a long time, and thus it is possible to detect an abnormality.

A ninth aspect of the present disclosure provides the operation recording system according to the seventh aspect, in which the abnormality detection unit may perform abnormality detection in a case where, when a voltage value indicated by the voltage information is equal to or higher than a threshold value, a total time is equal to or higher than a threshold value.

According to the operation recording system according to the present disclosure, it is assumed that the high-voltage state continues for a long time, and thus it is possible to detect an abnormality.

A tenth aspect of the present disclosure provides the operation recording system according to the seventh aspect, in which the abnormality detection unit may perform abnormality detection in a case where, when a current value indicated by the current information is equal to or higher than a threshold value, a total time is equal to or higher than a threshold value.

According to the operation recording system according to the present disclosure, it is assumed that the high-current state continues for a long time, and thus it is possible to detect an abnormality.

An electric compressor according to an eleventh aspect of the present disclosure includes the operation recording system according to any one of the first aspect to the tenth aspect, and a motor (19).

A vehicle air conditioning system according to a twelfth aspect of the present disclosure includes the electric compressor according to the eleventh aspect.

A vehicle according to a thirteenth aspect of the present disclosure includes the vehicle air conditioning system according to the twelfth aspect.

An operation recording method according to a fourteenth aspect of the present disclosure is an operation recording method applied to an electric compressor of a vehicle air conditioning system including an inverter circuit, the method includes an acquiring step of acquiring, as abnormality reference information, at least one of temperature information at a predetermined position in the inverter circuit, voltage information at the predetermined position in the inverter circuit, and current information at the predetermined position in the inverter circuit; and a recording processing step of recording the abnormality reference information and time information capable of being associated with the abnormality reference information in a predetermined recording unit.

### Reference Signs List

11: filter circuit
12: reactor
13: capacitor
14: snubber circuit
15: resistor
16: capacitor
17: switching unit
18: switching element
19: motor
21: motor control circuit
22: CPU
23: power supply circuit
24: low-voltage input
50: inverter circuit
60: operation recording system
61: acquisition unit
62: recording processing unit
63: recording unit
64: abnormality detection unit
110: CPU
120: memory
140: external interface
150: communication interface
160: input unit
170: display unit

## Claims

1. An operation recording system applied to an electric compressor of a vehicle air conditioning system including an inverter circuit, the operation recording system comprising:
an acquisition unit that acquires, as abnormality reference information, at least one of temperature information at a predetermined position in the inverter circuit, voltage information at the predetermined position in the inverter circuit, and current information at the predetermined position in the inverter circuit; and
a recording processing unit that records the abnormality reference information and time information capable of being associated with the abnormality reference information in a predetermined recording unit.

2. The operation recording system according to Claim 1, wherein
the temperature information is at least one of a temperature of a switching element in the inverter circuit, a temperature of a capacitor in the inverter circuit, and a temperature of a CPU in the inverter circuit.

3. The operation recording system according to Claim 1, wherein
the voltage information is at least one of a voltage of a switching element in the inverter circuit, a voltage of a capacitor in the inverter circuit, and a surge voltage generated in the inverter circuit.

4. The operation recording system according to Claim 1, wherein
the current information is at least one of a current flowing through a switching element in the inverter circuit, a current flowing through a capacitor in the inverter circuit, and a surge current generated in the inverter circuit.

5. The operation recording system according to Claim 1, wherein
the recording unit is a memory built in the electric compressor in advance or a memory provided in a device different from the electric compressor.

6. The operation recording system according to Claim 1, wherein
the time information is at least one of a continuous time that is a time when the abnormality reference information continuously satisfies a predetermined condition, an intermittent time that is a total time when the abnormality reference information satisfies the predetermined condition, and a detection time of the abnormality reference information.

7. The operation recording system according to Claim 1, further comprising:
an abnormality detection unit that performs abnormality detection based on information recorded in the recording unit.

8. The operation recording system according to Claim 7, wherein
the abnormality detection unit performs abnormality detection in a case where, when a temperature indicated by the temperature information is equal to or higher than a threshold value, a total time is equal to or higher than a threshold value.

9. The operation recording system according to Claim 7, wherein
the abnormality detection unit performs abnormality detection in a case where, when a voltage value indicated by the voltage information is equal to or higher than a threshold value, a total time is equal to or higher than a threshold value.

10. The operation recording system according to Claim 7, wherein
the abnormality detection unit performs abnormality detection in a case where, when a current value indicated by the current information is equal to or higher than a threshold value, a total time is equal to or higher than a threshold value.

11. An electric compressor comprising:
the operation recording system according to Claim 1; and
a motor.

12. A vehicle air conditioning system comprising:
the electric compressor according to Claim 11.

13. A vehicle comprising:
the vehicle air conditioning system according to Claim 12.

14. An operation recording method applied to an electric compressor of a vehicle air conditioning system including an inverter circuit, the method comprising:
an acquiring step of acquiring, as abnormality reference information, at least one of temperature information at a predetermined position in the inverter circuit, voltage information at the predetermined position in the inverter circuit, and current information at the predetermined position in the inverter circuit; and
a recording processing step of recording the abnormality reference information and time information capable of being associated with the abnormality reference information in a predetermined recording unit.
